Europäisches Patentamt

European Patent Office

Office européen des brevets

(11) Publication number: **0 317 680 B1**

(12) **EUROPEAN PATENT SPECIFICATION**

(45) Date of publication of patent specification: **22.01.92**

(51) Int. Cl.⁵: **C08F 255/02**, C08L 27/06, B32B 7/12, //(C08F255/02, 214:06,222:06)

(21) Application number: **87402683.4**

(22) Date of filing: **26.11.87**

(54) **Vinyl chloride-grafted ethylene copolymer useful as impact modifier and for the production of laminates, and process for producing same.**

(43) Date of publication of application:
**31.05.89 Bulletin 89/22**

(45) Publication of the grant of the patent:
**22.01.92 Bulletin 92/04**

(84) Designated Contracting States:
**AT BE CH ES IT LI NL SE**

(56) References cited:
**BE-A- 696 381**
**FR-A- 2 303 032**

**PATENT ABSTRACTS OF JAPAN, vol. 8, no. 178 (C-238)[1615], 16th August 1984**

**CHEMICAL ABSTRACTS, vol. 83, no. 12, 22nd September 1975, page 28, abstract no. 98352c, Columbus, Ohio, US**

(73) Proprietor: **ATOCHEM**
**4 & 8, Cours Michelet La Défense 10**
**F-92800 Puteaux(FR)**

(72) Inventor: **Okawa, Masahisa**

**2-6-55, Ikku-Cho Niihama-Shi Ehime-ken(JP)**
Inventor: **Emura, Tomoyuki**
**298-2-401, Setogaya-Cho, Hodogaya-ku Yokohama-shi, Kanagawa-ken(JP)**
Inventor: **Owatari, Yoshitake**
**1-10, Fujimi, Fukiage-Cho, Kitaadachi-gun Saitama-ken(JP)**
Inventor: **Mashita, Kentaro**
**4-9-3, Aobadai, Ichihara-shi Chiba-Ken(JP)**
Inventor: **Kawakita, Toshio**
**2-1-246, Kuwata-Cho, Ibaragi-shi Osaka-Fu(JP)**

(74) Representative: **Rochet, Michel et al ATOCHEM Département Propriété Industrielle 4, Cours Michelet La Défense 10 Cedex 42 F-92091 Paris-La-Défense(FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a vinyl chloride-grafted ethylene copolymer useful as impact modifier and for the production of laminates, and a process for producing same. More particularly, it relates to a vinyl chloride-grafted ethylene-acrylic or methacrylic ester-maleic anhydride copolymer and a process for producing same.

Polyolefins like polyethylene and polypropylene are economically produced in a large amount and widely used, since they have superior mechanical strength and processability and are inexpensive and useful for general purpose. However, difficulty is encountered when lamination is made between polyolefins and other materials such as polyvinyl chloride and polyamide for example to prepare composite articles, since polyolefins are nonpolar and poor in adhesiveness.

For improvement of adhesiveness of polyolefins, it is known a method where ethylene is copolymerized with a copolymerizable and adhesiveness-impartable component such as glycidyl methacrylate or maleic anhydride (cf. Japanese Patent Examined Publication No. 27527/71, etc.). There are also methods where an unsaturated carboxylic anhydride is grafted on a polyolefin such as polyethylene to introduce a polar group, thereby imparting adhesiveness to metal, glass or polar high molecular materials such as polyamide (cf. Japanese Patent Examined Publication Nos. 18392/62 and 32654/77). Although these copolymers are relatively good in adhesiveness to metal, glass or for example, polyamides, they have substantially no adhesiveness to non-rigid vinyl chloride polymers which is one of the most widely used high molecular materials.

There are also known methods of grafting vinyl chloride on ethylene copolymers such as ethylene-vinyl acetate copolymer and ethylene-methyl methacrylate copolymer (cf. Japanese Patent Examined Publication Nos. 27876/64 and 14229/68), the resulting products being used as wire coating materials, impact-strength modifier for vinyl chloride polymers, etc.. These vinyl chloride-grafted ethylene copolymers have small adhesiveness to polymers of relatively high polarity such as polyamides and polyesters.

The Belgian Patent Publication n° 696 381 discloses polymeric compositions comprising 98 to 60 % by weight of a polyvinyl chloride 2 to 40% by weight of a solid copolymer of ethylene and one monoethylenically unsaturated monomer.

The aim of this invention is to provide ethylene copolymer excellent in adhesiveness to metal, glass or polar high molecular materials such as polyamides, and also to non-rigid vinyl chloride polymers.

This invention relates to a vinyl chloride-grafted ethylene copolymer comprising, as backbone polymer, a copolymer comprising ethylene, an ester of a monohydric alcohol having from 1 to 8 carbon atoms with acrylic acid or methacrylic acid (hereinafter referred to as "(meth)acrylic ester") and an unsaturated dicarboxylic acid anhydride and, as pendant polymer, a vinyl chloride polymer.

The backbone polymer moiety is preferably present in an amount of about 2 % to 98 % by weight in the vinyl chloride-grafted copolymer of the invention. When said copolymer is intended to be used for improvement in adhesiveness to polyamides, polyesters and the like, the backbone polymer moiety is preferably present in an amount of about 50 % to 98 % by weight, more preferably about 60 % to 95 % by weight, in the vinyl chloride-grafted copolymer of the invention. When the vinyl chloride polymer as pendant polymer moiety is in an amount, on the basis of the vinyl chloride-grafted copolymer of the invention, less than 2 % by weight, adhesiveness to non-rigid vinyl chloride resin is unsufficient.

In this invention, the fact that the vinyl chloride polymer moiety is graft polymerized onto the backbone polymer is critical. Mere blend of the ethylene-(meth)acrylic ester-unsaturated dicarboxylic acid anhydride copolymer and the vinyl chloride polymer fails to give adhesiveness desired in this invention. The superior adhesiveness both to metal, glass or polar high molecular materials such as polyamides and polyesters and to non-rigid vinyl chloride polymers is obtained only by graft polymerization of the pendant vinyl chloride polymer onto the backbone ethylene copolymer, resulting in chemical bonding between them.

Due to the process used for producing such vinyl chloride-grafted ethylene polymer, as hereinafter described, the grafting rate of vinyl chloride on the backbone polymer, as hereinafter defined, generally ranges from about 40 % to 95 %, more preferably 45 % to 80 %.

The backbone ethylene-(meth)acrylic ester-unsaturated dicarboxylic acid anhydride copolymer used in this invention contains preferably from about 51 % to 96 % by weight ethylene unit, from about 3 to 40 % by weight of (meth)acrylic ester unit and from about 1 to 9 % by weight of unsaturated dicarboxylic acid anhydride unit. Monomers providing the unsaturated dicarboxylic acid anhydride unit include maleic anhydride, citraconic anhydride, itaconic anhydride, tetrahydrophtalic anhydride and the like, with maleic anhydride being preferred.

Furthermore, the backbone copolymer has a melt index (referred to as "MI" hereinafter) preferably within the range of about $1,67.10^{-3}$ to $0,833$ g/s. more preferably between about 5.10-3 and 0,333 g/s.

2

Such a backbone copolymer may be produced, for example, by a high pressure bulk polymerization method as described in British Patent No. 2,091,745, United States Patent No. 4,617,366 and United States No. 4,644,044.

The pendant vinyl chloride polymer may be a polymer of vinyl chloride alone or a copolymer of vinyl chloride with a small amount, for example up to about 25 % by weight, of at least one other vinyl comonomer polymerizable therewith. Such comonomers are, for example, carboxylic acid vinyl esters (e.g. vinyl acetate), vinylidene halides, (meth)acrylic acid alkyl esters, alkylvinyl ethers, ethylene, propylene, etc. The use of such comonomers may enhance adhesiveness of the present vinyl chloride-grafted ethylene copolymer.

The vinyl chloride-grafted ethylene copolymer of this invention may be produced by polymerization of vinyl chloride in the presence of the ethylene-(meth)acrylic ester-unsaturated dicarboxylic acid anhydride copolymer and of at least one free-radical initiator.

As polymerization method, there may be used suspension polymerization, bulk polymerization, emulsion polymerization and solution polymerization used for polymerization of known vinyl chloride polymers. In general, suspension polymerization in an aqueous medium using free-radical initiators is preferred. Polymerization temperature may be for example in the range of about 20 to 100°C.

The free-radical initiators are not critical and there may be used any of those which are commonly used in polymerization of vinyl chloride. As examples thereof, mention may be made of organic peroxides such as benzoyl peroxide, lauroyl peroxide, diisopropyl peroxydicarbonate, di-2-ethylhexyl peroxydicarbonate, t-butyl peroxypivalate, etc., azo compounds such as azobisisobutyronitrile, azobis 2,3-dimethylvaleronitrile, etc. These initiators may be used alone or in combination. An amount of the initiator(s) to be used is from about 0.01 to 10 % by weight of the backbone polymer.

Molecular weight of the pendant polymer may be controlled by conducting polymerization in the presence of a chain-transfer agent such as mercaptans and/or halogenated hydrocarbons.

The polymerization method will be hereinafter explained in more detail with reference to suspension polymerization.

As a suspension agent, there may be used gelatin, polyvinyl alcohol, water-soluble cellulose ether which are familiar to suspension polymerization of vinyl chloride. An amount of the suspension agent to be used is from about 0.01 to 10 % by weight on the basis of the backbone polymer.

PH regulators may further be used. To this effect, inorganic salts such as sodium hydrogenocarbonate, sodium dihydrogenophosphate, disodium hydrogenophosphate, etc. may be used. A suitable amount of there pH regulators is from about 0.01 to 10 % by weight based on the backbone polymer.

An amount of vinyl chloride monomer to be used in the polymerization is such that content of vinyl chloride is within the range of about 2 to 98 % by weight on the basis of the vinyl chloride-grafted ethylene copolymer to be obtained.

According to this invention, there are provided vinyl chloride-grafted ethylene copolymers and a process for preparing same, said copolymers being superior in adhesiveness both to metal, glass or polar high molecular materials such as polyamides, polyesters and the like and to non-rigid vinyl chloride polymers.

Therefore a further object of the present invention consists of a laminate comprising at least one layer of a high molecular material and at least one layer of the vinyl chloride-grafted ethylene copolymer as described hereinbefore at page 2 lines 7 to 9. The high molecular material may be a polar material such as polyamide, polyurethane (for example in the form of foams), polyester and the like, or a non-rigid vinyl chloride polymer, the latter generally comprising relatively high amounts of plasticizers and optionally foaming agents. The thickness of the high molecular material layer is preferably from about 25 to 3,000 $\mu$m. The thickness of the vinyl chloride-grafted ethylene copolymer layer is preferably from about 7 to 200 $\mu$m. The laminate according to the present invention may be produced either by continuous drylamination or by compression-moulding of the said at least one high molecular material layer with at least one vinyl chloride-grafted ethylene copolymer layer. Such a laminate may be used for example for waterproof fabrics prepared by lamination of non-rigid vinyl chloride polymer and a fabric such as polyamide or polyester.

Further it has been surprisingly discovered that the vinyl chloride-grafted ethylene polymers of the present invention may be efficiently used for improving the impact strength of rigid vinyl chloride polymers. Therefore the present invention further provides an impact-resistant blend comprising from about 60 % to 97 % by weight of a rigid vinyl chloride polymer and from about 3 % to 40 % by weight of the aforesaid vinyl chloride-grafted ethylene polymer. A rigid chloride polymer which may be used in the impact-resistant blend of this invention is well known in the art and generally consists of a vinyl chloride polymer containing very low amounts, if any, of plasticizers. The impact-resistant blend of this invention may be produced by dry blending of both components or by melt mixing of both components followed either by extrusion

3

through the conventional extruders used for vinyl chloride polymers, or by calendering of sheets.

This invention will be further explained by the following examples, the copolymer properties beeing measured by the following methods:

(a) Melt index (MI) : in accordance with ASTM D-1238 (190°C, 2.16 kg load).

(b) Content of vinyl chloride in grafted copolymer : sample is burnt in an oxygen atmosphere in a flask and the combustion gas produced is absorbed in an alkali liquid. This liquid is subjected to titration with silver nitrate to obtain chlorine content, from which content of vinyl chloride is calculated.

(c) Hexane extraction insoluble : sample is subjected to extraction with hot hexane for 24 hours in a Soxhlet extractor using a wire cloth of 350 meshes and ratio of extraction residue to amount of the sample is taken as hexane extraction insoluble. The ethylene-(meth)acrylic ester-maleic anhydride copolymer is soluble in hot hexane, but a vinyl chloride-grafted copolymer thereof is insoluble. The vinyl chloride polymer itself is also insoluble.

(d) Grafting rate on backbone polymer (%) : from the above results of measurement, the grafting rate is calculated by the equation :

$$[(c)-(b)]/[100-(b)] \times 100.$$

(e) Adhesion strength :

(1) Adhesion strength to polyamide :A film of polymer to be tested (100 $\mu$m thick) is superposed on a film of polyamide (100 $\mu$m thick ; "RAYPHANE"® T1401 produced by Toray Synthetic Film Co.) and the films are subjected to heat sealing under a temperature of 180°C, a pressure of 4 kg/cm$^2$ and during 5 minutes until the films adhere. The composite film obtained is then cut into strips, 10 mm wide, and the polyamide layer of this strip is peeled off at an angle of 180°C and at a pulling rate of 200 mm/min. by means of a tensile tester to obtain the peel strength, which is taken as the above-captioned adhesion strength.

(2) Adhesion strength to non-rigid vinyl chloride polymer :

A film of polymer to be tested (100 $\mu$m thick) is put between sheets of non-rigid vinyl chloride resin ("KANEVINYL COMPOUND"® KVC4400X produced by Kanegafuchi Chemical Co. Ltd.) (2 mm thick each) and the sheets are pressed by means of a pressing machine under a temperature of 180°C, a pressure of 10 kg/cm$^2$ and during 3 minutes. The pressed sheet is then cut into strips, 10 mm wide, and this strip is subjected to T-peeling test at a pulling rate of 100 mm/min. by means of a tensile tester to obtain the peel strength, which is taken as the above-captioned adhesion strength.

Example 1

In a stainless steel autoclave reactor were charged 100 parts by weight of deionized water, 80 parts by weight of an ethylene-ethyl acrylatemaleic anhydride copolymer (67.5/30/2.5 % by weight; MI = $1,17.10^{-2}$ g/s) marketed by CdF CHIMIE TERPOLYMERES under the tradename LOTADER® 4700, 0.2 part by weight of hydroxypropylmethyl cellulose (METHOLOSE® 65SH-50 produced by Shin-etsu Chemical Co. Ltd.), 0.15 part by weight of disodium hydrogenophosphate (Na$_2$HP0$_4$.12H$_2$0), 0.2 part by weight of di-2-ethyl-hexyl peroxydicarbonate and 0.2 part by weight of t-butyl peroxypivalate and the autoclave was subjected to deaeration under a pressure of 0.04 bar. Thereafter, 20 parts by weight of vinyl chloride monomer were charged therein and the content was heated to 60°C with stirring to initiate polymerization. After 4 hours, polymerization was discontinued, unaltered vinyl chloride monomer was purged and the content was taken out and dehydrated and dried.

The results of evaluation of the graft copolymer obtained are shown in Table 1.

Example 2

In a stainless steel autoclave reactor were charged 100 parts by weight of deionized water, 70 parts by weight of an ethylene-ethyl acrylatemaleic anhydride copolymer (72.3/25/2.7 % by weight; MI = $1,67.10^{-2}$ g/s) 0.1 part by weight of METHOLOSE® 65SH50, 0.15 part by weight of disodium hydrogenophosphate, 0.05 part by weight of di-2-ethylhexyl peroxydicarbonate and 0.05 part by weight of t-butyl peroxypivalate and the autoclave was subjected to deaeration under a pressure of 0.04 bar. Then, 30 parts by weight of vinyl chloride monomer were charged therein and the content was stirred at room temperature for 30 minutes, followed by heating to 60°C with stirring to initiate polymerization.

After 5 hours, polymerization was discontinued, unaltered vinyl chloride monomer was purged and the content was taken out and dehydrated and dried.

The results of evaluation of the graft copolymer obtained are shown in Table 1.

Example 3

In a stainless steel autoclave reactor were charged 100 parts by deionized water, 80 parts by weight of the same ethylene-ethyl acrylate-maleic anhydride copolymer as used in example 1, 0.1 part by weight of METHOLOSE® 65SH-50 and 0.08 part by weight of di-2-ethylhexyl peroxydicarbonate and the autoclave was subjected to deaeration under a pressure of 0.04 bar. 20 parts by weight of vinyl chloride monomer were then charged therein, followed by heating to 50°C with stirring to initiate polymerization. After 9 hours, the polymerization was discontinued, unaltered vinyl chloride monomer was purged and the content was taken out and dehydrated and dried.

The results of evaluation of the graft copolymer obtained are shown in Table 1.

Example 4

In a stainless steel autoclave reactor were charged 100 parts by weight of deionized water, 50 parts by weight of the same ethylene-ethyl acrylate-maleic anhydride copolymer as used in example 1, 0.2 part by weight of METHOLOSE® 65SH-50 and 0.2 part by weight of azobisisobutyronitrile and the autoclave was subjected to deaeration under a pressure of 0.04 bar. 50 parts by weight of vinyl chloride monomer were then charged therein, followed by heating to 60°C with stirring to initiate polymerization. After 10 hours, the polymerization was discontinued, unaltered vinyl chloride monomer was purged and the content was taken out and dehydrated and dried.

The results of evaluation of the graft copolymer obtained are shown in Table 1.

Example 5

In a stainless steel autoclave reactor were charged 100 parts by weight of deionized water, 80 parts by weight of an ethylen-ethyl acrylate-maleic anhydride copolymer (72/25/3 % by weight; MI = MI = $6{,}67.10^{-2}$ g/s)marketed by CdF CHIMIE TERPOLYMERES under the tradename LOTADER® 6600, 0.2 part by weight of METHOLOSE 65SH-50, 0.15 part by weight of disodium hydrogenophosphate, 0.2 part by weight of di-2-ethylhexyl peroxydicarbonate and 0.2 part by weight of t-butyl peroxypivalate and the autoclave was subjected to deaeration under a pressure of 0.04 bar. 20 parts by weight of vinyl chloride monomer were then charged therein, followed by stirring at room temperature for 30 minutes and then heating to 60°C with stirring to initiate polymerization. After 3 hours, polymerization was discontinued, unaltered vinyl chloride monomer was pur ged and the content was taken out and dehydrated and dried.

The results of evaluation of the graft copolymer obtained are shown in Table 1.

Example 6

Example 3 was repeated except for using the vinyl chloride monomer in an amount of 10 parts by weight. The results are shown in Table 1.

Example 7

Example 3 was repeated except for using the vinyl chloride monomer in an amount of 19 parts by weight and the vinyl acetate monomer in an amount of 1 part by weight. The results are shown in Table 1.

Comparative Example 1

Evaluation was effected on the ethylene-ethyl acrylate-maleic anhydride copolymer used in example 1 as a backbone polymer. The results are shown in Table 1.

Comparative Example 2

The ethylene-ethyl acrylate-maleic anhydride copolymer used as backbone polymer in example 1 and polyvinyl chloride (SUMILIT® Sx8G produced by Sumitomo Chemical Industries Company, Limited) were roll kneaded at a ratio of 85 parts : 15 parts by weight to obtain a blend. Evaluation was effected on this blend and the results are shown in Table 1.

Comparative Example 3

Comparative Example 2 was repeated except that the ratio of the ethylene-ethyl acrylate-maleic anhydride copolymer and the polyvinyl chloride was 70 parts : 30 parts by weight. The results of evaluation are shown in Table 1.

Comparative Example 4

Evaluation was effected on the ethylene-ethyl acrylate-maleic anhydride copolymer used as backbone polymer in example 5 and the results are shown in Table 1.

Example 8

In a stainless steel autoclave reactor were charged 100 parts by weight of deionized water, 25 parts by weight of the ethylene-ethyl acrylate-maleic anhydride copolymer used in example 1, 0.2 part by weight of METHOLOSE® 65SH-50 and 0.2 part by weight of azobisisobutyronitrile and the autoclave was subjected to deaeration under a pressure of 0.04 bar. 75 parts by weight of vinyl chloride monomer was charged therein, followed by heating to 60°C with stirring to initiate polymerization. After 9 hours, polymerization was discontinued, unaltered vinyl chloride monomer was purged and the content was taken out and dehydrated and dried. Evaluation was effected on the graft copolymer obtained and the results are shown in Table 1.

Table 1

| | (b) Content of vinyl unit component (wt %) | (c) Hexane extraction insoluble (wt %) | (d) Grafting rate on backbone polymer (%) | (e)-(1) Adhesion strength to polyamide (g/cm) | (e)-(2) Adhesion strength to non-rigid vinyl chloride resin (g/cm) |
|---|---|---|---|---|---|
| Example 1 | 15.7 | 65.8 | 59.4 | 860 | 1600 |
| " 2 | 22.5 | 74.1 | 66.6 | 790 | 1600 |
| " 3 | 11.5 | 63.5 | 58.8 | 940 | 1300 |
| " 4 | 38.8 | 87.5 | 79.6 | 450 | 1700 |
| " 5 | 12.0 | 76.7 | 73.5 | 710 | 1500 |
| " 6 | 6.5 | 48.9 | 45.3 | 680 | 1000 |
| " 7 | 12.1 | 63.0 | 57.9 | 930 | 1400 |
| Comparative Example 1 | 0 | 0.1 | - | 920 | 200 |
| " 2 | 15.0 | 15.8 | 0 | 20 | 200 |
| " 3 | 30.0 | 29.7 | 0 | 30 | 100 |
| " 4 | 0 | 1.0 | - | 880 | 300 |
| Example 8 | 71.5 | 92.1 | 72.2 | 50 | 1700 |

## Claims

1. A vinyl chloride-grafted ethylene copolymer comprising, as backbone polymer, a copolymer comprising ethylene, a (meth)acrylic ester and an unsaturated dicarboxylic acid anhydride and, as pendant polymer, a vinyl chloride polymer.

2. A vinyl chloride-grafted ethylene copolymer according to claim 1, comprising from 2 % to 98 % by weight of the backbone polymer.

3. A vinyl chloride-grafted ethylene copolymer according to claim 2, comprising from 50 % to 98 % by weight of the backbone polymer.

4. A vinyl chloride-grafted ethylene copolymer according to claim 3, comprising from 60 % to 95 % by weight of the backbone polymer.

5. A vinyl chloride-grafted ethylene copolymer according to any of claims 1 to 4, characterized in that the backbone polymer comprises from 51 % to 96 % by weight ethylene unit, from 3 to 40 % by weight of (meth)acrylic ester unit and from 1 to 9 % by weight of unsaturated dicarboxylic acid anhydride unit.

6. A vinyl chloride-grafted ethylene copolymer according to any of claims 1 to 5, characterized in that the backbone polymer has a melt index within the range of $1,67.10^{-3}$ to $0,833$ g/s.

7. A vinyl chloride-grafted ethylene copolymer according to any of claims 1 to 6, characterized in that the pendant polymer is a polymer of vinyl chloride with up to 25 % by weight of at least one other vinyl comonomer polymerizable therewith.

8. A vinyl chloride-grafted ethylene copolymer according to any of claims 1 to 7, characterized in that the unsaturated dicarboxylic acid of the backbone polymer is maleic anhydride.

9. A vinyl chloride-grafted ethylene copolymer according to any of claims 1 to 8, characterized in that the (meth)acrylic ester of the backbone polymer is an ester of a monohydric alcohol having from 1 to 8 carbon atoms with acrylic acid or methacrylic acid.

10. A process for producing a vinyl chloride-grafted ethylene copolymer according to claim 1, comprising polymerizing vinyl chloride in the presence of the ethylene-(meth)acrylic ester-unsaturated dicarboxylic acid anhydride copolymer and of at least one free-radical initiator.

11. A process according to claim 10, characterized in that polymerization is effected in suspension in an aqueous medium.

12. A process according to any of claims 10 and 11, characterized in that the initiator is selected from organic peroxides and azo compounds.

13. A process according to any of claims 10 to 12, characterized in that amount of the initiator is from 0.01 to 10 % by weight of the backbone.

14. A process according to claim 11, characterized in that polymerization is effected in the presence of from 0.01 % to 10 % by weight, on the basis of the backbone polymer, of a suspension agent.

15. A process according to one of claims 11 and 14, characterized in that polymerization is effected in the presence of from 0.01 % to 1 % by weight, based on the backbone polymer, of a pH regulator.

16. A laminate comprising at least one layer of a high molecular material and at least one layer of the vinyl chloride-grafted ethylene copolymer of claim 3.

17. A laminate according to claim 16, characterized in that the high molecular material is selected from polyamides, polyesters, polyurethanes and non-rigid vinyl chloride polymers.

18. A laminate according to one of claims 16 and 17, characterized in that the thickness of the high molecular material layer is from 25 to 3,000 $\mu$m.

19. A laminate according to one of claims 16 to 18, characterized in that the thickness of the vinyl chloride-grafted copolymer is from 7 to 200 $\mu$m.

20. An impact-resistant blend comprising from 60 % to 97 % by weight of a rigid vinyl chloride polymer and from 3 % to 40 % by weight of the vinyl chloride-grafted ethylene polymer of claim 1.

## Revendications

1. Copolymère d'éthylène greffé de chlorure de vinyle comprenant, comme squelette de polymère, un copolymère comprenant de l'éthylène, un ester (méth)acrylique et un anhydride d'acide dicarboxylique insaturé et, comme polymère pendant, un polymère de chlorure de vinyle.

2. Copolymère d'éthylène greffé de chlorure de vinyle suivant la revendication 1, comprenant 2% à 98% en poids du squelette de polymère.

3. Copolymère d'éthylène greffé de chlorure de vinyle suivant la revendication 2, comprenant 50% à 98% en poids du squelette de polymère.

4. Copolymère d'éthylène greffé de chlorure de vinyle suivant la revendication 3, comprenant 60% à 95% en poids du squelette de polymère.

5. Copolymère d'éthylène greffé de chlorure de vinyle suivant l'une quelconque des revendications 1 à 4, caractérisé en ce que le squelette de polymère comprend 51% à 96% en poids d'unités d'éthylène, 3% à 40% en poids d'unités d'ester (méth)acrylique et 1% à 9% en poids d'unités d'anhydride d'acide dicarboxylique insaturé.

6. Copolymère d'éthylène greffé de chlorure de vinyle suivant l'une quelconque des revendications 1 à 5, caractérisé en ce que le squelette de polymère a un indice de fluidité de l'intervalle de $1,67.10^{-3}$ à 0,833 g/seconde.

7. Copolymère d'éthylène greffé de chlorure de vinyle suivant l'une quelconque des revendications 1 à 6, caractérisé en ce que le polymère pendant est un polymère de chlorure de vinyle avec jusqu'à 25% en poids d'au moins un autre comonomère vinylique copolymérisable.

8. Copolymère d'éthylène greffé de chlorure de vinyle suivant l'une quelconque des revendications 1 à 7, caractérisé en ce que l'acide dicarboxylique insaturé du squelette de polymère est l'anhydride maléique.

9. Copolymère d'éthylène greffé de chlorure de vinyle suivant l'une quelconque des revendications 1 à 8, caractérisé en ce que l'ester (méth)acrylique du squelette de polymère est un ester d'un alcool monohydroxylé comptant 1 à 8 atomes de carbone avec l'acide acrylique ou l'acide méthacrylique.

10. Procédé de production d'un copolymère d'éthylène greffé de chlorure de vinyle suivant la revendication 1, qui comprend la polymérisation du chlorure de vinyle en présence du copolymère éthylène-ester (méth)acrylique-anhydride d'acide dicarboxylique insaturé et d'au moins un initiateur par radicaux libres.

11. Procédé suivant la revendication 10, caractérisé en ce que la polymérisation est exécutée en suspension dans un milieu aqueux.

12. Procédé suivant l'une quelconque des revendications 10 et 11, caractérisé en ce que l'initiateur est choisi parmi les peroxydes et azo-composés organiques.

9

**13.** Procédé suivant l'une quelconque des revendications 10 à 12, caractérisé en ce que la quantité de l'initiateur est de 0,01% à 10% en poids du squelette.

**14.** Procédé suivant la revendication 11, caractérisé en ce que la polymérisation est exécutée en présence de 0,01% à 10% en poids, sur la base du squelette de polymère, d'un agent de mise en suspension.

**15.** Procédé suivant l'une quelconque des revendications 11 et 14, caractérisé en ce que la polymérisation est exécutée en présence de 0,01% à 1% en poids, sur la base du squelette de polymère, d'un régulateur du pH.

**16.** Stratifié comprenant au moins une couche d'une matière de haut poids moléculaire et au moins une couche du copolymère d'éthylène greffé de chlorure de vinyle suivant la revendication 3.

**17.** Stratifié suivant la revendication 16, caractérisé en ce que la matière de haut poids moléculaire est choisie parmi les polyamides, les polyesters, les polyuréthannes et les polymères non rigides de chlorure de vinyle.

**18.** Stratifié suivant l'une quelconque des revendications 16 et 17, caractérisé en ce que l'épaisseur de la couche de matière de haut poids moléculaire est de 25 à 3000 $\mu$m.

**19.** Stratifié suivant l'une quelconque des revendications 16 à 18, caractérisé en ce que l'épaisseur de la couche de copolymère d'éthylène greffé de chlorure de vinyle est de 7 à 200 $\mu$m.

**20.** Mélange résistant au choc, comprenant 60% à 97% en poids d'un polymère rigide de chlorure de vinyle et 3% à 40% en poids du polymère d'éthylène greffé de chlorure de vinyle suivant la revendication 1.

**Patentansprüche**

**1.** Vinylchloridgepfropftes Ethylen-Copolymer enthaltend als Hauptkettenpolymer ein Copolymer, das Ethylen, einen (Meth)acrylester und ein Anhydrid ungesättigter Dikarbonsäure enthält, und als Seitenkettenpolymer ein Vinylchloridpolymer.

**2.** Vinylchloridgepfropftes Ethylen-Copolymer nach Anspruch 1, enthaltend 2 bis 98 Gew.-% Hauptkettenpolymer.

**3.** Vinylchloridgepfropftes Ethylen-Copolymer nach Anspruch 2, enthaltend 50 bis 98 Gew.-% Hauptkettenpolymer.

**4.** Vinylchloridgepfropftes Ethylen-Copolymer nach Anspruch 3, enthaltend 60 bis 95 Gew.-% Hauptkettenpolymer.

**5.** Vinylchloridgepfropftes Ethylen-Copolymer nach irgendeinem der Ansprüche 1 bis 4, dadurch gekennzeichnet, daß das Hauptkettenpolymer 51 bis 96 Gew.-% Ethyleneinheiten, 3 bis 40 Gew.-% (Meth)-acrylestereinheiten und 1 bis 9 Gew.-% Einheiten des Anhydrids ungesättigter Dikarbonsäure enthält.

**6.** Vinylchloridgepfropftes Ethylen-Copolymer nach irgendeinem der Ansprüche 1 bis 5, dadurch gekennzeichnet, daß das Hauptkettenpolymer einen Schmelzindex im Bereich von $1,67 \times 10^{-3}$ bis 0,833 g/s besitzt.

**7.** Vinylchloridgepfropftes Ethylen-Copolymer nach irgendeinem der Ansprüche 1 bis 6, dadurch gekennzeichnet, daß das Seitenkettenpolymer ein Vinylchloridpolymer mit bis zu 25 Gew.-% mindestens eines mit dem Vinylchlorid polymerisierbaren anderen Vinylcomonomers ist.

**8.** Vinylchloridgepfropftes Ethylen-Copolymer nach irgendeinem der Ansprüche 1 bis 7, dadurch gekennzeichnet, daß die ungesättigte Dikarbonsäure des Hauptkettenpolymers Maleinsäureanhydrid ist.

**9.** Vinylchloridgepfropftes Ethylen-Copolymer nach irgendeinem der Ansprüche 1 bis 8, dadurch gekennzeichnet, daß der (Meth)acrylester des Hauptkettenpolymers ein Ester eines einwertigen Alkohols mit 1 bis 8 Kohlenstoffatomen mit Acryl- oder Methacrylsäure ist.

10. Verfahren zur Herstellung eines vinylchloridgepfropften Ethylen-Copolymers nach Anspruch 1, umfassend das Polymerisieren von Vinylchlorid in Gegenwart des Copolymers von Ethylen, (Meth)acrylester und Anhydrid ungesättigter Dikarbonsäure und mindestens eines Radikalinitiators.

11. Verfahren nach Anspruch 10, dadurch gekennzeichnet, daß die Polymerisation in Suspension in einem wäßrigen Medium erfolgt.

12. Verfahren nach Anspruch 10 oder 11, dadurch gekennzeichnet, daß der Initiator ausgewählt wird aus den organischen Peroxiden und den Azoverbindungen.

13. Verfahren nach irgendeinem der Ansprüche 10 bis 12, dadurch gekennzeichnet, daß die Menge des Initiators 0,01 bis 10 Gew.-% der Hauptkette beträgt.

14. Verfahren nach Anspruch 11, dadurch gekennzeichnet, daß die Polymerisation in Gegenwart von 0,01 bis 10 Gew.-%, bezogen auf das Hauptkettenpolymer, eines Schwebemittels erfolgt.

15. Verfahren nach Anspruch 11 oder 14, dadurch gekennzeichnet, daß die Polymerisation in Gegenwart von 0,01 bis 1 Gew.-%, bezogen auf das Hauptkettenpolymer, eines pH-Reglers erfolgt.

16. Laminat enthaltend mindestens eine Schicht aus einem hochmolekularen Material und mindestens eine Schicht aus dem vinylchloridgepfropften Ethylen-Copolymer nach Anspruch 3.

17. Laminat nach Anspruch 16, dadurch gekennzeichnet, daß das hochmolekulare Material ausgewählt ist aus der Gruppe bestehend aus den Polyamiden, Polyestern, Polyurethanen und weichen Vinylchloridpolymeren.

18. Laminat nach Anspruch 16 oder 17, dadurch gekennzeichnet, daß die Dicke der Schicht aus hochmolekularem Material 25 bis 3.000 $\mu$m beträgt.

19. Laminat nach einem der Ansprüche 16 bis 18, dadurch gekennzeichnet, daß die Dicke des vinylchloridgepfropften Ethylen-Copolymers 7 bis 200 $\mu$m beträgt.

20. Schlagfeste Mischung enthaltend 60 bis 97 Gew.-% eines harten Vinylchloridpolymers und 3 bis 40 Gew.-% des vinylchloridgepfropften Ethylenpolymers nach Anspruch 1.